## Europäisches Patentamt

## European Patent Office

## Office européen des brevets

(19)

(11) **EP 0 940 376 B1**

(12)

# EUROPÄISCHE PATENTSCHRIFT

(45) Veröffentlichungstag und Bekanntmachung des Hinweises auf die Patenterteilung:
**04.09.2002   Patentblatt 2002/36**

(51) Int Cl.⁷: **C04B 35/043**, C04B 35/66, C04B 35/047

(21) Anmeldenummer: **98890057.7**

(22) Anmeldetag: **03.03.1998**

(54) **Basische freifliessende Giessmasse und daraus hergestellte Formteile**

Free flowing basic casting composition and shaped articles

Masse de coulée basique à écoulement libre et corps façonnés

(84) Benannte Vertragsstaaten:
**AT BE DE ES FR GB IT NL SE**

(43) Veröffentlichungstag der Anmeldung:
**08.09.1999   Patentblatt 1999/36**

(73) Patentinhaber: **Bugajski, Jerzy, Dr. Dipl.-Ing.
8700 Leoben (AT)**

(72) Erfinder: **Bugajski, Jerzy, Dr. Dipl.-Ing.
8700 Leoben (AT)**

(74) Vertreter: **Büchel, Kurt F. et al
Büchel, Kaminski & Partner
Austrasse 79
9490 Vaduz (LI)**

(56) Entgegenhaltungen:
**EP-A- 0 448 156        EP-A- 0 525 394**

## Beschreibung

Die Erfindung betrifft eine basische dilatante freifließende feuerfeste Gießmasse sowie daraus hergestellte Formteile wie Steine, Fertigbauteile, Feuerleichtprodukte und /oder Funktionalprodukte, wie z.B. Lochsteine, Spüler, Hülsen.

Unter Gießmassen werden feuerfeste Massen verstanden, deren Einbringen oder Formgebung durch Gießen erfolgt. Die entsprechende Konsistenz der Massen wird durch Vermischen trockener Bestandteile mit Anmachwasser bzw. mit Anmachlösung erzielt

Die Verfestigung der Gießmasse kann durch hydraulisches Abbinden der Kalziumaluminatzemente im kalten Zustand, durch chemische Bindung bzw. Mikropulverbindung im kalten Zustand und bei erhöhten Temperaturen sowie durch Sintervorgänge bei Betriebstemperaturen erfolgen. Als chemische Bindung kann z.B. eine Phosphatbindung, Wasserglasbindung, Mikrosilikabindung oder eine Bindung, die durch Einsatz von Metallpulvern entsteht, verwendet werden. Bei der Mikropulverbindung handelt es sich hauptsächlich um die Wirkung von London-van der Waals-Anziehungskräfte. Die feuerfesten Gießmassen, die gleichzeitig mehr als eine Bindungsart aufweisen, sind für zahlreiche Anwendungen vorteilhaft, da sie die gewünschten Festigkeiten in einem breiten Temperaturbereich aufweisen.

Die feuerfesten Gießmassen sind seit langem bekannt. Je nach chemischer Zusammensetzung und eingesetzten Rohstoffen unterscheidet man zwischen den nichtbasischen und basischen Gießmassen. Zu den nichtbasischen gehören Tonerdegießmassen und zirkonhaltige Gießmassen. Die Rohstoffbasis von basischen Gießmassen ist Magnesia, Magnesiachrom, Chromerz, Chromoxid sowie Spinell, z.B. $MgCr_2O_4$. Als feuerfeste Zusätze werden z.B. diverse Metalloxide, Metallcarbide, Metallpulver beziehungsweise Kohlenstoffträger eingesetzt.

Die traditionellen feuerfesten Gießmassen, die mittels Vibrationstechnik zugestellt werden, weisen thixotrope Eigenschaften auf. Thixotropie zeichnet sich durch eine Abnahme der scheinbaren Viskosität mit der Beanspruchungszeit bei konstanter Schergeschwindigkeit, bzw. durch eine Erhöhung der scheinbaren Viskosität ( sog. thixotropes Ansteifen) bei Verringerung der Schergeschwindigkeit aus. Der Einsatz von Verdichtungshilfen wie pneumatische oder elektrische Vibratoren ist notwendig, um eine Verflüssigung und Verdichtung thixotroper Masse zu erzielen., da sie nach dem Mischvorgang mit Wasser semi-trocken und unbeweglich ist. Wird eine thixotrope Gießmasse durch eine Überdosierung des Anmachwassers verflüssigt, was bei der Zustellung von schmalen Spalten und/oder komplizierten Formen erforderlich sein kann, so führt das zu einer inhomogenen Verteilung des Grobkornes und Feinkornes, das heißt zur Entmischung. Eine Wasserüberdosierung verursacht außerdem eine Senkung physikalischer Prüfwerte, wie z.B. offene Porosität und Festigkeit. Eine solche monolithische feuerfeste Auskleidung weist geringere Beständigkeit gegen Infiltration und Korrosion beim Einsatz in metallurgischen Aggregaten auf.

Der Einsatz von mechanischen Verdichtungshilfen, wie Vibratoren und/oder Flaschenrüttlern, hat folgende Nachteile:

- Die Homogenität verdichteter Gießmasse ist nicht immer optimal, es können Lunker auftreten,
- Probleme bei der Zustellung von schmalen Spalten und komplizierten Formen wegen eines eingeschränkten Wirkungsbereiches von Flaschenrüttlern,
- körperliche Belastung für das Personal.

Aus der EP 0 248 171 B1 ist eine thixotrope Gießmasse auf Basis von Magnesit vorzugsweise für die Zustellung von Stahlgießpfannen bekannt. Die Bindung dieser Masse besteht aus Borsäure, Alkalipolyphosphate und Kalziumhydroxid. Zum Erzielen einer ausreichender Dichte werden bei der Zustellung Vibratoren eingesetzt.

In der DE 195 18 468 A1 wird eine wasserhaltige, feuerfeste Gießmasse auf Basis von Mg0 mit einem Kohlenstoffgehalt zwischen 3 und 10 Gew.-%, einem Dispergiermittel in der Menge zwischen 0,1 und 2,0 Gew.-% sowie einer reaktiven Kieselsäure in der Menge zwischen 1 und 10 Gew.-% beschrieben. Dabei ist nach diesem Dokument (vgl. Spalte 2, Zeilen 4 bis 7) die Kieselsäure maßgeblich dafür verantwortlich, daß eine Hydratation der Sintermagnesia verhindert wird. Auch diese Masse zur monolithischen Auskleidung von metallurgischen Schmelzgefässen, vorzugsweise der Schlackenzone von Gießpfannen, wird mittels Vibrationstechnik verdichtet.

Aus der EP 0573 029 B1 ist die Verwendung eines in einem nichtwäßrigen Dispergiermedium dispergierten, oxidischen Mikropulvers bekannt Diese feinkörnige Suspension auf Basis MgO, $Al_2O_3$, $Cr_2O_3$ und/oder $TiO_2$ kann zur Herstellung von feuerfesten keramischen Massen und Formteilen hoher Dichte und Festigkeit verwendet werden. Die Hydratationsgefahr von Mg0 ist verringert, da zur Herstellung der Suspension nichtwäßrige Lösungsmittel eingesetzt werden. Versuche haben gezeigt, daß sich aus einer Masse, die 85 Gew.-% grobkörniges Matrixmaterial in der Kornfraktion 1,0μm bis 3 mm sowie 15 Gew.-% eines zuvor dispergierten, feinteiligen MgO-Mikropulvers die Formkörper durch Trockenpressen herstellen lassen. Die Rohdichte und Festigkeit des Grünlings und gebrannter Formkörper ist deutlich höher, als die aus dem Stand der Technik bekannten. Der Einsatz von nichtwäßrigen MgO-Suspensionen zur Herstellung von Gießmassen ist wegen der Umweltbelastung und der Sicherheitsrisiken während der Trocknung und Aufheizen zugestellter Aggregate wenig geeignet.

Aus der EP 0 609 868 A2 ist eine Pulvermischung enthaltend 2 bis 30 Gew.-% von kugelförmigen Partikeln mit einem mittleren Durchmesser < 30 µm auf Basis von einem oder mehreren feuerfesten Rohstoffen u.a. Chromit, Magnesia und Tonerdezement für den Einsatz in freifließenden Gießmassen bekannt geworden. Die Vorbehandlung der Rohstoffe, um die kugelförmigen Partikeln zu erzielen, sollte in einem Verfahren durch die mechanische Schlagbehandlung im Luftstrom oder durch Sprührösten erfolgen. Ein Nachteil dieser Giessmassen ist der erhöhte Arbeits- und Kostenaufwand fü das Herstellungsverfahren. Keines der 14 Ausführungsbeispiele betrifft eine basische freifließende Gießmasse, noch wird das Problem der MgO - Hydratation in diesem Dokument behandelt. Für alle Massen mit kugelförmigen Partikeln wird Natriumhexametaphosphat als Dispergierer vorgeschlagen Die Reaktion von MgO mit diesem Dispergierer und die darauffolgende Entstehung saurer Phosphate führt bei basischen Massen zur Flokulation und einem Zusammenbruch des Dispergiersystems

Wäre die Herstellung von wäßrigen basischen Suspensionen mit einer hohen MgO - Mikropulverkonzentration möglich, dann könnte ihr Einsatz zur Herstellung von Formteilen zum Beispiel durch Trockenpressen bzw. Stampfen vorteilhaft sein. Die Voraussetzung wäre jedoch, daß der Hydratationsgrad von Materialien auf Basis MgO in der wäßrigen Suspension nicht allzu groß ist.

Eine relativ neue Entwicklung stellen freifließende Tonerdegießmassen dar. Im Gegensatz zu den thixotropen Gießmassen sind keine mechanische Verdichtungshilfen notwendig, um eine geeignete Konsistenz und die der thixotropen Massen vergleichbaren physikalischen Prüfwerte zu erzielen. Ein freies Fließen wird durch dilatante Eigenschaften der Masse gefördert. Dilatanz zeichnet sich durch Abnahme der Viskosität mit sinkender Schergeschwindigkeit aus, wobei hier die sogenannte rheologische Dilatanz gemeint ist.

Die EP 0 525 394 B1 beschreibt eine feuerfeste hydraulisch gebundene nichtbasische Gießmasse. Diese Gießmasse auf Basis von Tonerderohstoffen ist wie folgt aufgebaut und nach Zugabe von 3,5 bis 7,0 Gewichtsanteilen Anmachwassers je 100 Gewichtsanteilen Feststoff,freifließend :

- 65 bis 87 Gew.-% eines feuerfesten Matrixmaterials auf Basis $Al_2O_3$, $ZrO_2$ und / oder $Cr_2O_3$ mit einer Korngröße zwischen 0,1 und 10 mm,
- 7,0 bis 22,0 Gew.-% einer reaktiven feuerfesten Komponente auf Basis $Al_2O_3$, $ZrO_2$ und / oder $Cr_2O_3$ mit einer Korngröße zwischen 0,1 und 10 µm,
- 0,5 bis 10,0 Gew.-% eines hydraulischen Bindemittels mit einem $Al_2O_3$-Gehalt über 68 Gew.-%,
- 0,2 bis 6,5 Gew.-% eines oder mehrerer stabilisierenden und/oder das Wasserrückhaltevermögen der Gießmasse fördernden Zusatzmittels.

Entscheidend für die gewünschten Fließeigenschaften freifließender Tonerdegießmasse ist die Abstimmung im Korngrößenbereich des feuerfesten Matrixmaterials und der reaktiven feuerfesten Komponente, wie auch die Abstimmung des Anmachwassers mit den genannten Zusatzmitteln.

Das Fließvermögen einer freifließenden Gießmasse wird aufgrund des Fließwertes beurteilt. Die Bestimmung des Fließwertes Fo erfolgt unmittelbar nach dem Mischvorgang mit Anmachwasser mit Hilfe eines vibrationsfreien Konsistenztests nach der Formel :

$$Fo = \left( \frac{dm,mm - 100\,mm}{100\,mm} \right) x\,100,\%$$

wo:    dm - das mittlere Durchmesser der Probe nach der bestimmten Fließdauer, 100 mm - das untere Durchmesser des Kegelstumpfes.

Der Konsistenztest für die freifließenden Gießmassen wird derzeit meistens mit dem Kegelstumpf Ø100 x Ø70 x 50 mm und einer Fließdauer von 60 sec nach ASTM C-860 durchgeführt. Die Gießmasse wird als freifließend angesehen, wenn der Fließwert Fo mindestens 80% als ein Ergebnis des vibrationsfreien Konsistenztests mit dem o.g. Kegelstumpf beträgt. Eine europäische Norm betreffend der Durchführung des Konsistenztests und Ermittlung des Fließwertes für die freifließenden Gießmassen ist erst in Ausarbeitung. Es wurde vorgeschlagen, daß der Kegelstumpf die Abmessungen Ø100 x Ø70 x 80 mm aufweisen und die Fließdauer 120 sec betragen soll. Es ist zu erwarten, daß bei der Verwendung dieses Kegelstumpfes der Fließwert dementsprechend größer sein wird.

Eine hohe Marktakzeptanz und gute Praxisergebnisse sind derzeit mit den freifließenden, hydraulisch gebundenen Gießmassen auf Basis von Tonerderohstoffen in mehreren Industriesparten zu verzeichnen. Sie haben sowohl überall dort, wo schon früher thixotrope nichtbasischen Gießmassen eingesetzt wurden, als auch in den neuen, schwer zugänglichen Bereichen der Hochtemperaturaggregaten Verwendung gefunden.

Basierend auf den Kenntnissen rheologischer Eigenschaften der $Al_2O_3$-Suspensionen und Erfahrungen betreffend der freifließenden Tonerdegießmassen, konnten bis jetzt keine basischen freifließenden Gießmassen zur Verfügung gestellt werden. Die Fachwelt ist bisher offensichtlich der Auffassung gewesen, daß die Eigenschaften der Materialien auf Basis von Magnesia und die rheologischen Anforderungen wesentliche Hindernisse sind, um eine basische freifließende Gießmasse zu entwickeln. Gemeint ist ein relativ hoher Bedarf an Anmachwasser und die Hydratationsneigung von Rohstoffen auf Basis von Magnesia. Erforderlich für freies Fließen einer basischen Gießmasse ist vor allem eine optimale Dispergierung und ausgeprägte Dilatanz der hochkonzentrierten wäßrigen Mg0-Suspension. Das Fließverhalten einer feuerfesten Gießmasse hängt hauptsächlich von rheologischen Eigenschaften der Suspension, die aus den feinkörnigen Komponenten der Masse entsteht, ab.

Der vorliegenden Erfindung liegt die Aufgabe zugrunde, eine basische dilatante freifließende feuerfeste Gießmasse auf Basis von Magnesia und/oder Chromerz zur Verfügung zu stellen. Dabei soll die Möglichkeit sowohl einer ausschließlich feinkörnigen, als auch einer fein-grobkörnigen Alternative geschaffen werden.

Gelöst wird die gestellte Aufgabe einer feinkörnigen Alternative durch die Merkmale des Anspruches 1. Die nach den zwingenden Merkmalen des Anspruches 1 hergestellte Gießmasse kann zum Vergießen sehr schmaler Spalten z.B. < 10 mm, bzw. als eine hochkonzentrierte wäßrige Suspension zur Herstellung z.B. trockengepreßter oder gestampfter dichter Steine eingesetzt werden. Es hat sich weiter als vorteilhaft erwiesen, wenn, ebenfalls nach den Merkmalen des Anspruches 1, fakultativ Bindemittel, feuerfeste oder andere Zusätze Verwendung finden. Dilatante Eigenschaften können nur bei einer ausgezeichneten Dispergierung d.h. der Zerkleinerung von großen, harten Partikelagglomeraten in der Suspension erzielt werden. Diese Tatsache wird genutzt, wenn eine wäßrige, hochkonzentrierte Suspension, hergestellt nach Merkmalen des Anspruches 1 zur Steinherstellung eingesetzt wird. Eine sehr gute Dispergierung der Suspension ist in diesem Fall notwendig, um eine dichte, homogene Matrix der Steine zu erzielen.

Eine Voraussetzung für die praktische Anwendung einer basischen freifließenden Gießmasse ist, daß die Hydratation der zur Herstellung der Masse eingesetzten Materialien auf Basis MgO markant verlangsamt wird. Dies kann gleichzeitig mit den verwendeten Dispergiermitteln sowie nach den fakultativen Merkmalen des Anspruches 1 verwendeten Bindemitteln erzielt werden. Der Hydratationsgrad von MgO-Kauster nach dem Kontakt mit der verwendeten Dispergierlösung war fünfinal kleiner als nach dem Kontakt mit Wasser. Der Test wurde 30 Minuten bei 25°C mit anschließendem schnellen Trocknen bei 160°C durchgeführt. Die Bestimmung des Hydratationsgrades erfolgte gravimetrisch, wobei ein Hydratationsgrad von 100% der vollständigen Umsetzung des MgO zu $Mg(OH)_2$ entspricht. Die getrockneten bzw. gebrannten Prüfkörper hergestellt aus der basischen freifließenden Gießmasse wiesen keine Hydratationsschäden auf. Der Einsatz von z.B. mit Carbonsäuren vorbehandelten MgO-Pulvern bietet eine weitere Möglichkeit, die Hydratation der basischen freifließenden Gießmassen zu verringern.

Zur Lösung der gestellten Aufgabe für eine fein-grobkörnige Alternative dienen die Merkmale des Anspruches 2. Auch in diesem Fall sind die zu Anspruch 1 genannten Merkmale notwendig, um ein freies Fließen der erfindungsgemäßen basischen Gießmasse zu erzielen, wobei jedoch die Verwendung von Bindemitteln zwingend ist Das Einbringen bzw. die Formgebung der Gießmasse nach dieser Alternative kann durch Vergießen bzw. Pumpen erfolgen. Diese Alternative kann vor allem für eine monolithische Zustellung bzw. Reparatur von Hochtempetauraggregaten und/oder zur Herstellung von Fertigbauteilen, Funktionalprodukten bzw. Feuerleichtprodukten Verwendung finden.

Die Vorteile der erfindungsgemäßen basischen freifließenden Gießmasse können im Vergleich zu der freifließenden Tonerdegießmasse bei zahlreichen Anwendungen eintreten, wie: eine bessere Korrosionsbeständigkeit und Erosionsbeständigkeit gegen aggressive Schlacken, Metallschmelzen und Ofenatmosphäre und/oder ein günstiger Preis / Leistungsverhältnis.

Der Einsatzbereich der feinkörnigen und der fein-grobkörnigen Gießmasse wird später durch die in den abhängigen Ansprüchen angeführten Merkmale verdeutlicht und durch die Beispiele untermauert.

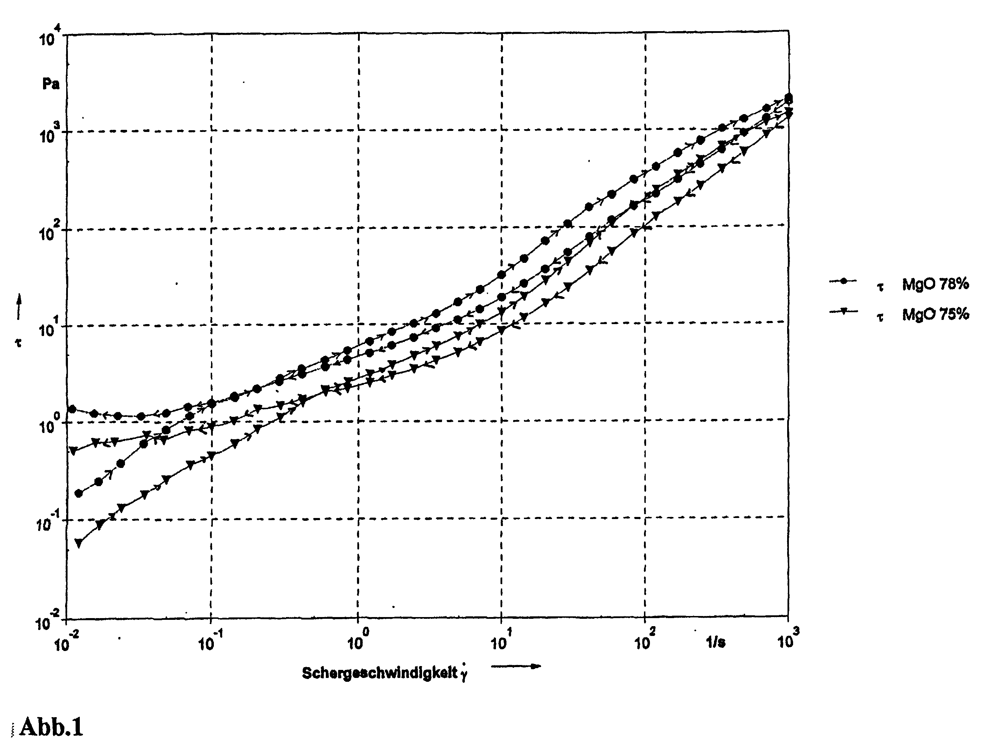

Für die ausgeprägten dilatanten Eigenschaften - wie der Verlauf der Fließkurven in Abb. 1 zeigt - und für ein freies Fließen der erfindungsgemäßen basischen Gießmasse sind folgende Merkmale entscheidend:

- aufeinander abgestimmte Kornzusammensetzung,
- die chemischen und physikalischen Eigenschaften der Kornfraktion < 45 µm,
- die Art und Menge des Dispergiermittels. Gemäß einer bevorzugten Ausgestaltung wird die Anmachlösung mit einer Genauigkeit von 0,2 Gew.-% zugegeben.

Weitere vorteilhafte Ausführungsformen der Erfindung ergeben sich aus den abhängigen Ansprüchen 3 bis 10. Der Effekt der erfindungsgemäßen basischen Gießmasse nach den Merkmalen des Anspruches 3 liegt darin, daß sie nach der Zugabe des Anmachwassers und nach dem Mischvorgang, ohne die für die thixotropen Gießmassen notwendige Vibrationsverdichtung , d.h. ohne Anwendung einer externer Energie, frei und homogen fließt Zur Beurteilung ihres Fließvermögens dient der früher beschriebene Konsistenztest nach ASTM C-860, wobei der Fließwert mindestens 80% betragen soll.

Die nach den Merkmalen des Anspruches 4 verwendeten feuerfesten Materialien auf Basis MgO in der Komfraktion <45µm sind vorzugsweise synthetische Magnesiasorten wie Magnesiakauster, Sintermagnesia bzw. Schmelzmagnesia. Die durch Sprührösten gewonnene MgO-Pulver werden auch als Magnesiakauster bezeichnet. Derartige feuerfeste dilatanzfördernde Materialien können sowohl nach Anspruch 1, als auch nach den Merkmalen des Anspruches 2 mit Vorteil eingesetzt werden. Das feuerfeste Material ebenfalls auf Basis MgO in der Körnung bis zu 15 mm besteht nach weiteren Merkmalen des Anspruches 4 aus Sintermagnesia, Schmelzmagnesia, Magnesiachrom-Coklinker, und/oder Magnesiachrom-Schmelzkorn.

Einer der Vorteile der erfindungsgemäßen freifließenden Gießmasse ist, daß sie mit einem oder mehreren Arten von Bindemitteln zur Verfügung gestellt werden kann. Nach den Merkmalen des Anspruches 5 sind sowohl diverse chemische, hydraulische, als auch temporäre Bindemittel einsetzbar, wobei die Gießmasse im erhärteten Zustand die einer basischen thixotropen Gießmasse vergleichbaren physikalischen Prüfwerte aufweist.

Mit den feuerfesten Zusätzen kann die thermomechanische Beständigkeit, die Infiltrationsbeständigkeit und/ oder die Temperaturwechselbeständigkeit der Gießmasse wesentlich erhöht werden.

Zur Lösung der erfindungsgemäßen Aufgabe trugen Untersuchungen oberflächenchemischer und rheologischer Eigenschaften wäßriger MgO-Suspensionen < 45 um wesentlich bei. Die Kenntnis des Dispergierungsmechanismus ist vorteilhaft bei der Auswahl feuerfester Zusätze und gegebenenfalls der Art und Menge des Bindemittels. Eine Wechselwirkung dieser Komponenten mit der feinkörnigen Fraktion des feuerfesten Materials auf Basis von MgO und/oder Chromerz kann zum Verschwinden bzw. zur Verstärkung dilatanter Eigenschaften und des freien Fließens führen. Von der Gruppe, der als chemische Bindemittel bekannten Phosphate, sind z.B. nur wenige für die freifließende basische Gießmasse geeignet, wenn als Dispergiermittel eine bestimmte Polyelektrolytart verwendet wird.

Eine positive Beeinflussung der Dispergierwirkung und der dilatanten Eigenschaften einer basischen freifließenden Gießmasse wurde erfindungsgemäß nach den Merkmalen des Anspruches 8 durch den Einsatz von bestimmten Aminen erzielt. Diese Beeinflussung ist auf die Adsorption von Aminen sowie eine Änderung des Zetapotentials von MgO - Partikeln in der Suspension zurückzuführen.

Die nach den Merkmalen des Anspruches 9 eingesetzten Zusätze haben unterschiedliche Wirkung. So können z.B. organische Fasern die Trocknungsrisse beim Aufheizprozeß verhindern. Eine Verbesserung der Temperaturbeständigkeit einer basischen freifließenden Gießmasse kann durch Stahlfasern erfolgen. Eine Verringerung der Infiltration durch Metallschmelzen und Schlacken aufgrund der Kapillarwirkung kann durch erfindungsgemäßen Zusatz von z.B. verdampfenden bzw. ausbrennbaren, kugelförmigen Materialien mit dem Durchmesser von 5 bis 80 µm erzielt werden.

Die erfindungsgemäße basische freifließende Gießmasse ist nach den Merkmalen des Anspruches 10 aufgrund ihrer Eigenschaften überall dort einsetzbar, wo bis jetzt die thixotropen basischen Gießmassen eine Verwendung finden, d.h. für die feuerfeste monolithische Zustellung bzw. Reparatur von Hochtemperaturaggregaten, als auch für die vibrationsfreie Herstellung von feuerfesten Formteilen wie Fertigbauteilen, Funktionalprodukten, Feuerleichtprodukten und darüber hinaus zur Herstellung von trockengepreßten bzw. gestampften dichten Steinen. Als Hochtemperaturaggregate, die erfahrungsgemäß mit feuerfesten basischen Produkten zugestellt werden, finden nach den Merkmalen des Anspruches 10 dabei Pfannen, Reaktoren, Behandlungsgefäße, Transportgefäße, Sammelgefäße, Tundish, Öfen, Konverter, Regeneratoren, Rinnen der Stahlindustrie, Metallindustrie, Zement-, Kalk- und Gipsindustrie, chemischer Industrie und anderen Industriesparten Verwendung.

Die Erfindung wird nachstehend anhand von Ausführungsbeispielen erläutert. Dabei beziehen sich die Beispiele 1 bis 3 auf die erfindungsgemäße freifließende Gießmasse unterschiedlicher Zusammensetzung nach den Merkmalen des Anspruches 2 und das Beispiel 4 auf die erfindungsgemäße dilatante Gießmasse nach den Merkmalen des Anspruches 1.

Beispiel 1

Eine erfindungsgemäße dilatante freifließende Gießmasse auf Basis von Magnesia mit Phosphat /Mikrosilikabindung weist folgende Zusammensetzung auf :

| | |
|---|---|
| Sintermagnesia 98,5% MgO 0,045 bis 5 mm | 66,0 Gew.-% |
| Schmelzmagnesia 98,3% MgO <0,045 mm | 15,0 Gew.-% |
| Magnesiakauster > 97,0% MgO < 0,045 mm | 15,0 Gew.-% |
| Phosphatbinder | 1,0 Gew.-% |
| Binder auf Basis Mikrosilika | 2,0 Gew.-% |
| Silizium Pulver | 1,0 Gew.-% |
| Masse trocken | 100,0 Gew.-% |
| multifunktionaler Polyelektrolyt | 0,7 Gew.-% |
| Wasser | 7,8 Gew.-% |
| Anmachlösung, bezogen auf Feststoff trockener Masse | 8,5 Gew.-% |

Beispiel 2

Eine erfindungsgemäße dilatante freifließende Gießmasse auf Basis von Magnesia hydraulisch gebunden weist folgende Zusammensetzung auf :

| | |
|---|---|
| Sintermagnesia 98,5% MgO 0,045 bis 5 mm | 65,0 Gew.-% |
| Schmelzmagnesia 98,3% MgO < 0,045 mm | 15,0 Gew.-% |
| Magnesiakauster > 97,0% MgO < 0,045 mm | 12,0 Gew.-% |
| kalzinierte Tonerde 0,2 bis 6,0 $\mu$m | 3,0 Gew.-% |
| Tonerdezement > 69 Gew.-% $Al_2O_3$ | 5,0 Gew.-% |
| Masse trocken | 100,0 Gew.-% |
| multifunktionaler Polyelektrolyt | 0,4 Gew.-% |
| Amin | 0,2 Gew.-% |
| Wasser | 6,9 Gew.-% |
| Anmachlösung, bezogen auf Feststoffanteil der Masse | 7,5 Gew.-% |

Beispiel 3

Eine erfindungsgemäße dilatante freifließende Gießmasse auf Basis von Magnesia und Chromerz mit Phosphat / Mikrosilikabindung ist wie folgt aufgebaut:

| | |
|---|---|
| Sintermagnesia 98,5% MgO 0,045 bis 5 mm | 31,0 Gew.-% |
| Chromerz Transval 0 bis 1,5 mm | 35,0 Gew.-% |
| Schmelzmagnesia 98,3% MgO < 0,045 mm | 15,0 Gew.-% |
| Magnesiakauster > 97% MgO < 0,045 mm | 15,0 Gew.-% |
| Phosphatbinder | 2,0 Gew.-% |
| Binder auf Basis Mikrosilika | 2,0 Gew.-% |
| Masse trocken | 100,0 Gew.-% |
| Natriumsalz mehrbasischer Carbonsäuren | 0,4 Gew.-% |
| Amin | 0,3 Gew.-% |
| Wasser | 7,8 Gew.-% |
| Anmachlösung bezogen auf Feststoffanteil trockener Masse .. | 8,5 Gew.-% |

Beispiel 4

Eine erfindungsgemäße dilatante feinkörnige Gießmasse auf Basis von Magnesia mit Mikrosilikabindung ist wie folgt aufgebaut:

| | |
|---|---|
| Schmelzmagnesia 98,3% MgO < 0,045 mm | 49,8 Gew.-% |
| Magnesiakauster > 97,0% MgO < 0,045 mm | 47,0 Gew.-% |
| natürlicher organischer Polymer | 0,2 Gew.-% |
| Binder auf Basis Mikrosilika | 3,0 Gew.-% |
| Masse trocken | 100,0 Gew.-% |
| multifunktionaler Polyelektrolyt | 1,8 Gew.-% |
| Amin | 0,3 Gew.-% |
| Wasser | 23,4 Gew.-% |
| Anmachlösung bezogen auf Feststoffanteil trockener Masse | 25,5 Gew.-% |

Die trockenen Komponenten der Masse in den Beispielen 1 bis 4 wurden zuerst trocken und danach mit angegebener Menge der Anmachlösung in einem Zwangsmischer 6 bis 15 Minuten vermischt Das Fließvermögen nach dem Mischvorgang sowie die physikalischen Prüfwerte erhärteter und bei 160°C getrockneter sowie bei 900°C bzw. 1500°C gebrannter Gießmasse ist der Tabelle 1 zu entnehmen.

Tabelle 1

| Der Fließwert Fo und die physikalischen Prüfwerte der in den Beispielen 1 bis 4 angegebenen basischen freifließenden Gießmasse ; RD (Rohdichte), OP (offene Porosität), KDF (Kaltdruckfestigkeit) | | | | |
|---|---|---|---|---|
| | Beispiel 1 | Beispiel 2 | Beispiel 3 | Beispiel 4 |
| Anmachwasser, Gew.-% | 7,8 | 6,9 | 7,8 | 23,4 |
| Fo, % | **105** | **90** | **120** | **130** |
| nach Trocknen bei 160°C: | | | | |
| RD, g/cm3 | 2,71 | 2,78 | 2,84 | 2,17 |
| OP, Vol.-% | 17,7 | 16,8 | 14,0 | 28,3 |
| KDF, N/mm2 | 34 | 39 | 44 | 32 |
| nach Brand bei 900°C: | | | | |
| RD, g/cm3 | 2,68 | 2,75 | 2,78 | 2,06 |
| OP, Vol.-% | 22,1 | 19,5 | 23,1 | 36,8 |
| KDF, N/mm2 | 17 | 23 | 12 | 8 |
| nach Brand bei 1500°C | | | | |
| RD, g/cm3 | 2,82 | 2,92 | 2,94 | 2,23 |
| OP, Vol.-% | 18,7 | 14,3 | 20,6 | 27,4 |
| KDF, N/mm2 | 45 | 41 | 27 | 28 |

Die in der Tabelle 1 angegebenen physikalischen Prüfwerte der basischen freifließenden dilatanten Gießmasse von den Beispielen 1 bis 3 zeigen, daß das Prüfwerteniveau thixotroper Gießmassen auf Basis MgO mit vergleichbarer Bindung erreicht wurde. Eine Erhöhung der Festigkeit von erfindungsgemäßen Gießmasse ist durch den Einsatz einer größeren Menge von Bindemitteln möglich. Dies kann jedoch in manchen Fällen die chemische Beständigkeit und die Druckfeuerbeständigkeit negativ beeinflussen.

Die basische wäßrige dilatante Gießmasse im Beispiel 4 hat keine aus dem Stand der Technik bekannte basische thixotrope Gießmasse mit vergleichbar feinem Kornaufbau als Referenz.

In der Abb. 1 sind die Auf- und Abwärtsfließkurven ( gekennzeichnet durch die Pfeile ) der dilatanten wäßrigen Suspensionen auf Basis MgO < 45 µm mit zwei unterschiedlichen MgO - Gehalten von 75% bzw. 78% dargestellt. Die Zusammensetzung der Anmachlösung entspricht der vom Beispiel 4. Die Bestimmung der Fließkurven erfolgte im Kegel / Platte - Meßsystem.

**Patentansprüche**

1. Feuerfeste, basische, freifließende Gießmasse bzw. hochkonzentrierte, wäßrige Suspension auf Basis MgO und/ oder Chromerz mit folgender Zusammensetzung :

   a) 76,0 bis 98,5 Gew.-% vorzugsweise 80,0 bis 98,5 Gew.-% eines feuerfesten, dilatanzfördernden Materials auf Basis MgO und/oder Chromerz mit einer Korngröße zwischen 0,1 und 45,0 µm, vorzugsweise mit einer Korngröße kleiner als 25,0 µm,

   b) 0,1 bis 4,0 Gew.-% eines oder mehrerer dilatanzfördernder Dispergiermittel und Netzmittel, gewählt aus der Gruppe bestehend aus multifunktionaler Polyelektrolyt, Amin und Salz mehrbasischer Carbonsäuren, mit der Zugabe von 20 bis 30, vorzugsweise 21 bis 26 Gewichtsteilen Anmachwassers, bezogen auf den Feststoffanteil der Masse,

c) gegebenenfalls 0,5 bis 12,0 Gew.-% eines oder mehrerer Bindemittel,

d) gegebenenfalls bis zu 6,5 Gew.-% eines oder mehrerer feuerfester Zusätze auf Basis $Al_2O_3$, $Cr_2O_3$, $ZrO_2$, $TiO_2$, SiC, Metallpulver, Kohlenstoffträger, mit einer Korngröße kleiner als 3 mm,

e) gegebenenfalls 0,05 bis 2,5 Gew.-% eines oder mehrerer Zusätze zur Verhinderung der Trocknungsrisse beim Aufheizen bzw. zur Verbesserung der Temperaturwechselbeständigkeit sowie zur Verhinderung der Infiltration durch Metallschmelze und/oder Schlacke,

**2.** Feuerfeste, basische, freifließende Gießmasse auf Basis MgO und/oder Chromerz, **gekennzeichnet durch** folgende Zusammensetzung :

a) 35,0 bis 75,0 Gew.-%, vorzugsweise 55,0 bis 75,0 Gew.-% eines feuerfesten Materials auf Basis MgO und/oder Chromerz mit einer Korngröße zwischen 0,045 und 15,0 mm,

b) 15,0 bis 50 Gew.-%, vorzugsweise 25,0 bis 42,0 Gew.-% eines feuerfesten, dilatanzfördernden Materials auf Basis MgO und/oder Chromerz mit einer Korngröße zwischen 0,1 und 45,0 µm, vorzugsweise mit einer Korngröße kleiner als 25,0 µm,

c) 0,1 bis 4,0 Gew.-% eines oder mehrerer dilatanzfordernder Dispergiermittel und Netzmittel, gewählt aus der Gruppe bestehend aus multifunktionaler Polyelektrolyt, Amin und Salz mehrbasischer Carbonsäuren, mit der Zugabe von 5 bis 1O Gewichtsteilen Anmachwassers, bezogen auf den Feststoffanteil der Masse,

d) 1,0 bis 10,0 Gew.-% eines oder mehrerer Bindemittel,

e) gegebenenfalls bis zu 6,5 Gew.-% eines oder mehrerer feuerfester Zusätze auf Basis $Al_2O_3$, $Cr_2O_3$, $ZrO_2$, $TiO_2$, SiC, Metallpulver, Kohlenstoffträger, mit einer Korngröße kleiner als 3mm,

f) gegebenenfalls 0,05 bis 2,5 Gew.-% eines oder mehrerer Zusätze zur Verhinderung der Trocknungsrisse beim Aufheizprozeß bzw. zur Verbesserung der Temperaturwechselbeständigkeit sowie zur Verhinderung der Infiltration **durch** Metallschmelze und/oder Schlacke,

**3.** Gießmasse nach Anspruch 1 oder 2, **dadurch gekennzeichnet, daß** sie nach Zugabe des Anmachwassers und nach dem Mischvorgang einen Fließwert von mindestens 80 % aufweist.

**4.** Gießmasse nach Anspruch 1 oder 2, **dadurch gekennzeichnet, daß** das feuerfeste dilatanzfördernde Material auf Basis MgO aus Sintermagnesia, Schmelzmagnesia und/oder Magnesiakauster, und das feuerfeste Material, ebenso auf Basis MgO, aus Sintermagnesia, Schmelzmagnesia, Magnesiachrom - Coklinker und/oder Magnesiachrom - Schmelzkorn besteht.

**5.** Gießmasse nach Anspruch 1 oder 2, **dadurch gekennzeichnet, daß** ein oder mehrere Bindemittel aus der Gruppe: Phosphate, Sulfate, Mikrosilika, Wassergläser, Tonerdezemente, Tone, Borverbindungen und/oder temporäre Bindemittel gewählt sind.

**6.** Gießmasse nach Anspruch 1 oder 2, **dadurch gekennzeichnet, daß** der feuerfeste Zusatz aus kalzinierter Tonerde, Schmelzkorund, MA -Spinell Chromoxid grün, Baddeleyit, Titanoxid, Siliziumcarbid, Magnesiumpulver, Siliziumpulver, Aluminiumpulver, Eisenpulver, Ferrochrompulver, Ruß und/oder Graphit besteht, wobei die feuerfesten Zusätze eine Korngröße zwischen 0,1 und 3 mm aufweisen.

**7.** Gießmasse nach Anspruch 1 oder 2, **dadurch gekennzeichnet, daß** das Dispergiermittel und Netzmittel eine Mischung aus einem multifunktionalen Polyelektrolyten und einem Amin ist.

**8.** Gießmasse nach Anspruch 1 oder 2, **dadurch gekennzeichnet, daß** das Amin eine oder mehrere Stickstoffsubstituenten: $-C_2H_4OR$, -H, $-CH_3$, $-C_2H_5$, $-C(CH_3)_2CH_2OH$ enthält, wobei R=H bzw. $R=C_2H_4$ ist.

**9.** Gießmasse nach Anspruch 1 oder 2, **dadurch gekennzeichnet, daß** der Zusatz in Form von organischen Fasern und/oder Stahlfasern und/oder kugelförmigen, verdampfenden bzw. ausbrennbaren Materialien besteht, wobei letztere einen Durchmesser von 5 bis 80 µm aufweisen.

**10.** Gießmasse nach einem der Ansprüche 1 bis 8 **gekennzeichnet durch** ihre Verwendung sowohl für die feuerfeste monolithische Zustellung bzw. Reparatur von Hochtemperaturaggregaten, als auch zur Herstellung von feuerfesten Formteilen wie Fertigbauteilen, Funktionalprodukten, Feuerleichtprodukten und/oder trockengepreßten bzw. gestampften dichten Steinen, wobei als Hochtemperaturaggregate eine Pfanne, ein Reaktor, ein Ofen, ein Behandlungs-, Transport- oder Sammelgefäß, ein Tundish, ein Konverter, ein Regenerator und eine Rinne in der Stahl-, Metall-, Zement-, Kalk-, Gipsindustrie, in der chemischen Industrie und in anderen Industriesparten vorgesehen ist bzw. sind.

**Claims**

1. Refractory, free-flowing, basic casting composition or highly concentrated, aqueous suspension based on MgO and/or chromium ore, having the following composition:

   a) 76.0 to 98.5% by weight, preferably 80.0 to 98.5% by weight, of a refractory, dilatancy-promoting material based on MgO and/or chromium ore having a particle size between 0.1 and 45 $\mu$m, preferably having a particle size of less than 25.0 $\mu$m,
   b) 0.1 to 4.0% by weight of one or more dilatancy-promoting dispersants and wetting agents selected from the group consisting of polyfunctional polyelectrolyte, amine and salt of polybasic carboxylic acids, with the addition of 20 to 30, preferably 21 to 26, parts by weight of mixing water, based on the solids content of the composition,
   c) optionally 0.5 to 12.0% by weight of one or more binders,
   d) optionally up to 6.5% by weight of one or more refractory additives based on $Al_2O_3$, $Cr_2O_3$, $ZrO_2$, $TiO_2$, SiC, metal powder, carbon carrier, having a particle size of less than 3 mm,
   e) optionally 0.05 to 2.5% by weight of one or more additives for preventing drying cracks on heating or for improving the thermal shock resistance and for preventing infiltration by metal melt and/or slag.

2. Refractory, free-flowing, basic casting composition based on MgO and/or chromium ore, **characterized by** the following composition:

   a) 35.0 to 75.0% by weight, preferably 55.0 to 75.0% by weight, of a refractory material based on MgO and/ or chromium ore having a particle size between 0.045 and 15.0 mm,
   b) 15.0 to 50% by weight, preferably 25.0 to 42.0% by weight, of a refractory, dilatancy-promoting material based on MgO and/or chromium ore having a particle size between 0.1 and 45.0 $\mu$m, preferably having a particle size of less than 25.0 $\mu$m,
   c) 0.1 to 4.0% by weight of one or more dilatancy-promoting dispersants and wetting agents selected from the group consisting of polyfunctional polyelectrolyte, amine and salt of polybasic carboxylic acids, with the addition of 5 to 10 parts by weight of mixing water, based on the solids content of the composition,
   d) 1.0 to 10.0% by weight of one or more binders,
   e) optionally up to 6.5% by weight of one or more refractory additives based on $Al_2O_3$, $Cr_2O_3$, $ZrO_2$, $TiO_2$, SiC, metal powder, carbon carrier, having a particle size of less than 3 mm,
   f) optionally 0.05 to 2.5% by weight of one or more additives for preventing drying cracks during the heating process or for improving the thermal shock resistance and for preventing infiltration by metal melt and/or slag.

3. Casting composition according to Claim 1 or 2, **characterized in that** it has a flow value of at least 80% after addition of the mixing water and after the mixing process.

4. Casting composition according to Claim 1 or 2, **characterized in that** the refractory dilatancy-promoting material based on MgO consists of sintered magnesia, fused magnesia and/or magnesia causter, and the refractory material, likewise based on MgO, consists of sintered magnesia, fused magnesia, chromium magnesia coklinker and/ or fused chromium magnesia particles.

5. Casting composition according to Claim 1 or 2, **characterized in that** one or more binders from the group consisting of phosphates, sulphates, microsilica, waterglasses, high-alumina cements, clays, boron compounds and/or temporary binders are chosen.

6. Casting composition according to Claim 1 or 2, **characterized in that** the refractory additive consists of calcined aluminas, fused corundum, MA spinel, chromium oxide green, baddeleyite, titanium oxide, silicon carbide, magnesium powder, silicon powder, aluminium powder, iron powder, ferrochromium powder, carbon black and/or graphite, the refractory additives having a particle size of between 0.1 and 3 mm.

7.  Casting composition according to Claim 1 or 2, **characterized in that** the dispersant and wetting agent comprise a mixture of a polyfunctional polyelectrolyte and an amine.

8.  Casting composition according to Claim 1 or 2, **characterized in that** the amine contains one or more nitrogen substituents: $-C_2H_4OR$, -H, $-CH_3$, $-C_2H_5$, $-C(CH_3)_2CH_2OH$, where R is H or R is $C_2H_4$.

9.  Casting composition according to Claim 1 or 2, **characterized in that** the additive is in the form of organic fibres and/or steel fibres and/or spherical, vaporizable or combustible material, the latter having a diameter of 5 to 80 $\mu$m.

10. Casting composition according to any of Claims 1 to 8, **characterized by** their use both for the supply or repair of refractory monolithic high-temperature units and for the production of refractory shaped articles, such as finished components, functional products, light-weight refractory products and/or dry-pressed or stamped dense stones, a ladle, a reactor, a furnace, a treatment, transport or collecting vessel, a tundish, a converter, a regenerator and a trough in the steel, metal, cement, lime or gypsum industry, in the chemical industry and in other branches of industry being provided as high-temperature units.

## Revendications

1.  Masse de coulée basique réfractaire fluide ou une suspension aqueuse hautement concentrée à base de MgO et / ou de chromite, avec la composition suivante :

    a) de 76,0 à 98,5 % en poids et, de préférence, de 80,0 à 98,5 % en poids d'un matériau réfractaire assurant une dilatance, à base de MgO et / ou de chromite, avec une granulométrie entre 0,1 et 45,0 $\mu$m et, de préférence, une granulométrie inférieure à 25,0 $\mu$m,

    b) de 0,1 à 4,0 % en poids d'un ou de plusieurs agents dispersants / mouillants assurant une dilatance, choisis dans le groupe comprenant les polyélectrolytes multifonctionnels, les amines et les sels d'acides carboniques polyfonctionnels, avec addition de 20 à 30 et, de préférence, de 21 à 25 parties en poids d'eau de dilution, sur la base de la fraction solide de la masse,

    c) le cas échéant, de 0,5 à 12,0 % en poids d'un ou de plusieurs agents liants,

    d) le cas échéant, jusqu'à 6,5 % en poids d'un ou de plusieurs additifs réfractaires à base d'$Al_2O_3$, de $Cr_2O_3$, de $ZrO_2$ de $TiO_2$, de SiC, de poudre métallique, de support de carbone, avec une granulométrie inférieure à 3 mm,

    e) le cas échéant, de 0,05 à 2,5 % en poids d'un ou de plusieurs additifs pour empêcher l'apparition de fissures de séchage lors d'un chauffage, ou pour améliorer la résistance aux changements de température, ainsi que pour empêcher l'infiltration de métal fondu et / ou de scories.

2.  Masse de coulée basique réfractaire fluide à base de MgO et / ou de chromite, **caractérisée par** la composition suivante :

    a) de 35,0 à 75,0 % en poids et, de préférence, de 55,0 à 75,0 % en poids d'un matériau réfractaire à base de MgO et / ou de chromite, avec une granulométrie entre 0,045 et 15,0 mm,

    b) de 15,0 à 50 % en poids et, de préférence, de 25,0 à 42,0 % en poids d'un matériau réfractaire assurant une dilatance, à base de MgO et / de chromite, avec une granulométrie entre 0,1 et 45,0 $\mu$m et, de préférence, avec une granulométrie inférieure à 25,0 $\mu$m,

    c) de 0,1 à 4,0 % en poids d'un ou plusieurs agents dispersants / mouillants assurant une dilatance, choisis dans le groupe comprenant les polyélectrolytes multifonctionnels, les amines et les sels d'acides carboniques polyfonctionnels, avec addition de 5 à 10 parties en poids d'eau de dilution, sur la base de la fraction solide de la masse,

d) de 1,0 à 10,0 % en poids d'un ou de plusieurs agents liants,

e) le cas échéant, jusqu'à 6,5 % en poids d'un ou de plusieurs additifs réfractaires à base d'$Al_2O_3$, de $Cr_2O_3$, de $ZrO_2$, de $TiO_2$, de SiC, de poudre métallique, de support de carbone, avec une granulométrie inférieure à 3 mm,

f) le cas échéant, de 0,05 à 2,5 % en poids d'un ou de plusieurs additifs pour empêcher l'apparition de fissures de séchage lors d'une opération de chauffage, pour améliorer la résistance aux changements de température, ainsi que pour empêcher l'infiltration de métal fondu et / ou de scories.

3. Masse de coulée selon la revendication 1 ou la revendication 2, **caractérisée en ce qu'**après l'addition de l'eau de dilution et après l'opération de mélange, elle présente un coefficient d'écoulement d'au moins 80 %.

4. Masse de coulée selon la revendication 1 ou la revendication 2, **caractérisée en ce que** le matériau réfractaire assurant une dilatance, à base de MgO, est constitué par de la magnésie frittée, de la magnésie ayant subi une fusion, et / ou de la magnésie caustique et le matériau réfractaire, également à base de MgO, est constitué par de la magnésie frittée, de la magnésie ayant subi une fusion, un clinker mixte magnésie - chrome et des granulés magnésie - chrome obtenus par fusion.

5. Masse de coulée selon la revendication 1 ou la revendication 2, **caractérisée en ce que** l'on choisit un ou plusieurs agents liants dans le groupe constitué par : les phosphates, les sulfates, les silices micronisées, les verres solubles, les ciments alumineux, les argiles, les composés du bore et / ou les agents liants temporaires.

6. Masse de coulée selon la revendication 1 ou la revendication 2, **caractérisée en ce que** l'additif réfractaire est choisi parmi l'alumine calcinée, le corindon obtenu par fusion, la spinelle chromique verte MA, la baddeleyite, l'oxyde de titane, le carbure de silicium, la poudre de magnésium, la poudre de silicium, la poudre d'aluminium, la poudre de fer, la poudre de ferrochrome, le noir de carbone et / ou le graphite, où l'additif réfractaire a une granulométrie entre 0,1 et 3 mm.

7. Masse de coulée selon la revendication 1 ou la revendication 2, **caractérisée en ce que** l'agent dispersant / mouillant est un mélange d'un polyélectrolyte multifonctionnel et d'une amine.

8. Masse de coulée selon la revendication 1 ou la revendication 2, **caractérisée en ce que** l'amine contient un ou plusieurs substituants sur l'azote : - $CH_2H_4OR$, -H, -$CH_3$, -$C_2H_5$, -$C(CH_3)_2CH_2OH$, où R = H ou R = $C_2H_4$.

9. Masse de coulée selon la revendication 1 ou la revendication 2, **caractérisée en ce que** l'additif est sous la forme de fibres organiques et / ou de fibres d'acier et / ou d'un matériau sphérique volatilisable ou combustible, le diamètre des sphères étant de 5 à 80 μm.

10. Masse de coulée selon l'une des revendications 1 à 8, **caractérisée par** son utilisation aussi bien pour la réalisation ou la réparation d'installations monolithiques réfractaires opérant à haute température, que pour la fabrication d'éléments réfractaires tels que des éléments de construction préfabriqués, des produits fonctionnels, des produits réfractaires légers et / ou obtenus par compression à sec ou des pierres denses comprimées, où l'installation opérant à haute température est une chaudière, un réacteur, un four, un récipient de traitement, de transport ou collecteur, un avant-creuset, un convertisseur, un régénérateur et une conduite dans l'industrie de l'acier, des métaux, du ciment, de la chaux, du gypse, dans l'industrie chimique et d'autres secteurs industriels.

Abb.1